Europäisches Patentamt

European Patent Office

Office européen des brevets

(19)

(11) **EP 0 991 786 B1**

(12) **FASCICULE DE BREVET EUROPEEN**

(45) Date de publication et mention
de la délivrance du brevet:
**05.12.2001 Bulletin 2001/49**

(51) Int Cl.[7]: **C22B 11/00**, C22B 11/12,
C22B 3/42, C22B 3/24,
C25C 1/20, G03C 5/395

(21) Numéro de dépôt: **98932197.1**

(22) Date de dépôt: **12.06.1998**

(86) Numéro de dépôt international:
**PCT/FR98/01242**

(87) Numéro de publication internationale:
**WO 98/59081 (30.12.1998 Gazette 1998/52)**

(54) **SEPARATION D'IONS METALLIQUES ABSORBES SUR UNE RESINE ET INSTALLATION DE RECYCLAGE D'EFFLUENTS PHOTOGRAPHIQUES INCLUANT UN ECHANGEUR ET UNE CUVE A ELECTROLYSE**

ABTRENNUNG VON AUF HARZ ABSORBIERTEN METALLIONEN UND ANLAGE MIT IONENAUSTAUSCHER UND ELEKTROLYSEZELLE ZUR REGENERIERENDEN AUFARBEITUNG FOTOGRAFISCHER BÄDER

SEPARATING METAL IONS ABSORBED ON A RESIN AND INSTALLATION FOR RECYCLING PHOTOGRAPHIC EFFLUENTS INCLUDING AN EXCHANGER AND AN ELECTROLYSIS VESSEL

(84) Etats contractants désignés:
**AT BE CH DE ES GB IE IT LI NL SE**

(30) Priorité: **19.06.1997 FR 9707812**

(43) Date de publication de la demande:
**12.04.2000 Bulletin 2000/15**

(73) Titulaire: **Gasser, Gérard**
**68270 Wittenheim (FR)**

(72) Inventeur: **Gasser, Gérard**
**68270 Wittenheim (FR)**

(74) Mandataire: **Nuss, Pierre et al**
**10, rue Jacques Kablé**
**67080 Strasbourg Cédex (FR)**

(56) Documents cités:
**WO-A-90/12898        DD-A- 126 856**
**FR-A- 2 621 051       FR-A- 2 666 591**
**GB-A- 2 054 182       US-A- 4 159 930**

- **PATENT ABSTRACTS OF JAPAN vol. 009, no. 129 (P-361), 5 juin 1985 & JP 60 014240 A (TEIJIN ENGINEERING KK), 24 janvier 1985**
- **PATENT ABSTRACTS OF JAPAN vol. 004, no. 042 (C-005), 3 avril 1980 & JP 55 014849 A (TEIJIN ENG KK), 1 février 1980**
- **PATENT ABSTRACTS OF JAPAN vol. 007, no. 143 (C-172), 22 juin 1983 & JP 58 055542 A (DAIICHI SEIYAKU KK), 1 avril 1983**

**Description**

La présente invention concerne les procédés de récupération de métaux absorbés sur un support du type résine, en particulier dans le domaine du traitement et du recyclage d'effluents industriels, notamment d'effluents résultant du développement photographique, et a pour objet un procédé de séparation et de récupération de métaux absorbés sur une résine échangeuse d'ions et un procédé et une installation de traitement et de recyclage d'au moins certains effluents du type précité, mettant en oeuvre le procédé de séparation précité.

Actuellement, les résines cationiques saturées par des ions métalliques ou un mélange d'ions métalliques sont généralement régénérées par l'un des procédés suivants :

- élution par un acide ou un agent chélatan avec ou sans effet chromatographique,
- régénération dans une cellule d'électrolyse,
- pompage des ions au moyen de fibres de résines et sous l'action d'un champ électrostatique vers des compartiments recevant les solutions salines concentrées.

Or, tous les procédés décrits ci-dessus aboutissent à l'obtention de solutions de sels métalliques concentrés, généralement mélangés entre eux et avec d'autres constituants ou éventuellement monométalliques suite à un traitement coûteux et nécessitant un investissement important.

En outre, les procédés précités sont limités, en ce qui concerne l'obtention de métaux, à ceux dont le potentiel normal d'oxydo-réduction est supérieur ou égal à - 1,2 volts.

Par ailleurs, on connaît également actuellement diverses techniques pour traiter ces effluents parmi lesquelles les plus utilisées sont la précipitation, la cémentation, l'échange d'ions, l'électrolyse, l'ultrafiltration et l'osmose inverse, dont chacune est appliquée directement et indépendamment des autres techniques aux effluents à traiter, notamment aux bains de blanchiment-fixage chargés en argent.

La technique de précipitation consiste à précipiter l'ion argent par un sulfure de sodium ou potassium selon :

$$2Ag^+ + S^{--} \rightarrow Ag_2 S$$

Ce procédé détruit le bain définitivement et produit du sulfure d'argent qu'il faut recycler dans la métallurgie de l'argent. Pour ce faire, on procède à la "coupellation" lors de laquelle on déplace l'Ag par le plomb fondu selon la réaction :

$$Ag_2 S + Pb \rightarrow 2 Ag + PbS$$

La récupération du plomb se fait par un procédé thermique extrêmement laborieux et complexe dénommé couramment "Pattinsonnage". Cette technique est extrêmement toxique et problématique par rapport à la pollution de l'environnement qui en résulte.

La cémentation consiste, quant à elle, à déplacer l'argent en solution par le fer, qui est électropositif, selon

$$2Ag^+ + Fe \rightarrow 2Ag + Fe++$$

Ce procédé est réalisé par passage de la solution à désargenter dans une cartouche contenant des copeaux de fer ou d'acier et est surtout employé pour désargenter les eaux de lavage des films à faible teneur en argent. On aboutit à un argent de mauvaise qualité mélangé à du fer et on charge l'effluent traité avec des ions fer.

La technique par échange d'ions (voir par exemple DD-A- 126 856) consiste à fixer le complexe dithiosulfate d'argent présent dans les bains sur une résine échangeuse d'ions du type fortement basique par échange des ions dithiosulfate d'argent contre des ions chlorure selon :

$$3[[R] + Cl^-] + [Ag\,(S_2O_3)_2]^{---} \rightarrow 3\,[R] + [Ag\,(S_2O_3)_2]^{---} + 3Cl^-$$

L'argent est ensuite élué par une solution de thiosulfate de sodium ou de chlorure de sodium, cet éluat pouvant être recyclé dans une unité de désargentage par électrolyse.

Ce procédé est surtout bien adapté au traitement des eaux de lavage des films ou pour finir le désargentage d'effluents déjà pré-désargentés par électrolyse et présentant de faibles teneurs en argent. Ce procédé tel qu'il est mis en oeuvre actuellement a pour principaux inconvénients que :

- la teneur rémanente en Ag des effluents traités présente souvent une grande dispersion en fonction du régime de travail des ateliers de développement, les seuils de concentration maximum dans les rejets fixés par les lois et règlements ne peuvent pas toujours être garantis ;
- les eaux effluentes sont chargées en chlorure au prorata de la teneur initiale en Ag ;
- pour les effluents provenant de procédés de photographies couleur contenant des complexes ferriques tels que Fer III - EDTA ou ferrocyanure, ceux-ci sont également fixés et empoisonnent progressivement la résine ;
- les résines anioniques utilisées ne peuvent pas être récupérées, ni réutilisées ;
- l'argent n'est pas décomplexé par rapport au thiosulfate et le bain traité ne retrouve pas du tout une composition permettant sa réutilisation.

La technique de l'électrolyse consiste à déposer l'Ag contenu dans les bains usés de fixage ou de blanchiment/ fixage par électrolyse directe de ces bains selon :

$$Ag[(S_2O_3)_2]^{---} <----> Ag^+ + 2\ S_2O_3^{--}$$

$$Ag^+ + e^- \rightarrow Ag$$

Cette technique d'électrolyse peut être mise en oeuvre selon plusieurs variantes ou applications, mentionnées ci-après :

1) L'électrolyse de bains de fixage ou de blanchiment/fixage avec régénération de ceux-ci consiste à procéder à un désargentage partiel jusqu'à une teneur minimum de 1 g/l sous une tension limitée à 1,3 V. Dans ces conditions modérées d'électrolyse, l'Ag déposée est de bonne qualité, le rendement en courant est proche de 100 % et le bain n'est pas décomposé et est recyclé après addition de produits "régénérants" compensant la consommation des réactifs par les réactions irréversibles du procédé photographique.

De ce fait, le volume du bain augmente au fur et à mesure des régénérations et périodiquement on procède à une purge de bain partiellement désargenté qui doit être traité par un dépollueur.

Par ailleurs, dans le cas des bains de blanchiment-fixage et vu la présence du complexe Fe III - EDTA dans les procédés de photographie couleur, des réactions secondaires aux électrodes diminuent le rendement en courant.

Dans le meilleur des cas, le taux de récupération du bain ne peut excéder 60 % puisqu'il est donné par le rapport entre la teneur moyenne à l'entrée qui est en moyenne de 2,5 g/l d'Ag et celle à la sortie limitée par le procédé lui-même à 1 g/l.

Les dernières évolutions de cette technique d'électrolyse directe des bains permettent d'aboutir à un désargentage avec un taux résiduel minimal de 0,5 g/l (ce qui représente encore 20 % de la teneur initiale), produisent des déchets sous forme de billes en graphite et ne sont adaptés qu'au traitement des bains photographiques noir et blanc.

2) L'électrolyse de bains de fixage ou de blanchiment entraînant la destruction de ceux-ci aboutit à un désargentage poussé (1 à 10 mg/l) par une électrolyse énergique sous environ 1,8 V. Ces conditions énergiques provoquent la précipitation de sulfure d'Ag par décomposition du thiosulfate. $Ag_2S$ précipité doit être filtré après floculation, et la décomposition des thiosulfates génère aussi un dégagement de $H_2S$ toxique et nauséabond. En outre, $Ag_2S$ doit être à nouveau traité selon la technique de précipitation décrite ci-dessus.

3) Le désargentage électrolytique des eaux de lavage consiste à réaliser l'électrolyse dans des appareils spéciaux comportant une cathode constituée soit par une mousse en acier inoxydable, soit par un empilement de billes de graphite vibrées présentant une très grande surface active, l'anode étant en titane. Ces dispositifs permettant d'atteindre des teneurs d'argent < 1 mg/l dans les eaux traitées sont aussi mis en oeuvre par les dépollueurs pour finir le désargentage de bains de fixage ou de blanchiment/fixage préalablement traités comme décrit ci-dessus (dans ce cas, pour des raisons économiques, le premier désargentage par électrolyse classique est limité à une teneur de 100 mg/l).

Ce procédé présente l'inconvénient de générer des billes de graphite recouvertes d'argent qu'il faut traiter à leur tour.

L'ultrafiltration et l'osmose inverses sont des procédés membranaires mettant en oeuvre des modules contenant des membranes semi-perméables dont la porosité est choisie selon les substances à éliminer. Elles exigent des pressions de travail relativement élevées et ne conviennent que pour des eaux peu chargées telles que les eaux de rinçage par exemple. En outre, leur mise en oeuvre demande des moyens techniques très importants et onéreux.

Ainsi, le premier objet de la présente invention consiste à concevoir un procédé de séparation et de récupération de métaux absorbés sur une résine échangeuse d'ions, par exemple après traitement d'effluents chargés ou de bains de galvanoplastie, ne présentant pas les inconvénients, ni les limitations, des procédés connus actuels et permettant notamment d'éluer sélectivement et de récupérer successivement différents métaux (par exemple : Au, Cu, Ag) saturant une résine, par exemple cationique, dans l'ordre croissant de leur électronégativité ou électropositivité, tout en ne générant pas de résidus du type hydroxydes de métaux lourds notamment.

L'invention a également pour objet de concevoir un procédé et une installation de traitement et de recyclage d'au moins certains effluents résultant du développement photographique, avec récupération de l'argent présent dans les effluents, ne présentant pas les inconvénients, ni les limitations des procédés actuels, pouvant traiter indifféremment les effluents peu chargés et très chargés, fournissant des solutions régénérées réutilisables en développement photographique en quantité équivalente aux effluents traités, permettant de récupérer la quasi-totalité de l'argent et ne rejetant que des quantités minimales, voire quasi nulles, d'effluents finaux.

En outre, le procédé selon l'invention ne devra nécessiter que des investissements limités et permettre des réutilisations répétées des substances actives intervenant dans le traitement.

A cet effet, l'invention concerne, en premier lieu, un procédé de séparation d'ions métalliques absorbés sur une résine échangeuse d'ions, présentant les caractéristiques de la revendication 1.

L'invention concerne, en second lieu, un procédé de traitement et de recyclage d'au moins certains effluents rejetés par les laboratoires et/ou ateliers de développement photographique, notamment les bains photographiques usés par exemple de fixage ou de blanchiment/fixage, présentant les caractéristiques de la revendication 5.

Enfin, selon la revendication 19, l'invention concerne également une installation pour le traitement et le recyclage des bains de fixage ou de blanchiment-fixage et, éventuellement, des eaux de lavage en photographie, destinée en particulier à la mise en oeuvre du procédé de traitement et de recyclage mentionné ci-dessus.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :

la figure 1 est une représentation synoptique d'une installation selon l'invention comprenant deux échangeurs d'ions ;
la figure 2 est une représentation synoptique d'une installation selon l'invention comprenant un échangeur d'ions, et,

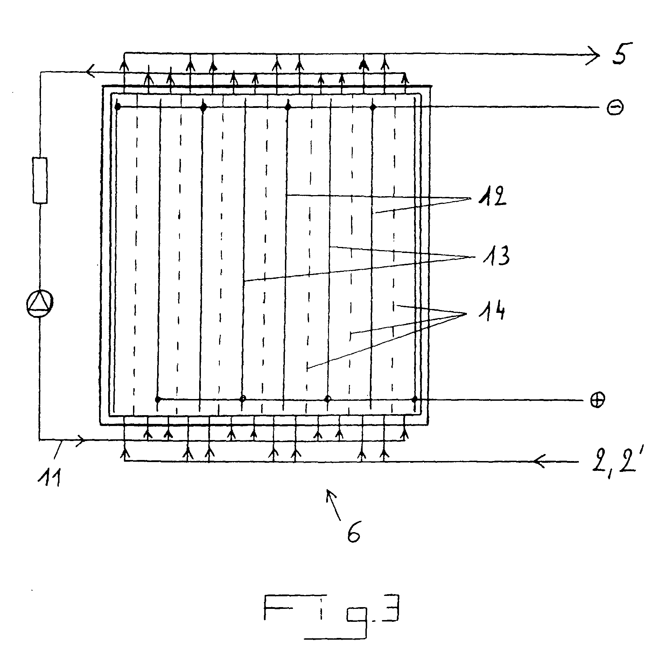

la figure 3 représente une vue de dessus (après enlèvement de son couvercle) d'un voltamètre faisant partie de l'installation représentée aux figures 1 et 2.

Conformément à l'invention, le procédé de séparation d'ions métalliques absorbés sur une résine échangeuse d'ions consiste à mettre en suspension ou à percoler la résine, préférentiellement cationique, chargée avec un solvant polaire contenant un agent d'élution ou un mélange d'agents d'élution renfermant au moins un ligand organique ou minéral apte à complexer les ions métalliques à séparer, à faire circuler un courant électrique continu, constant ou non, dans la solution éluante chargée en complexes métalliques ou dans le mélange résine/solution éluante chargée formant électrolyte entre au moins une cathode en un métal identique à celui des ions métalliques à récupérer par dépôt et au moins une anode en un matériau inerte dans les conditions physico-chimiques données, en maintenant la cathode, pendant les phases actives de dépôt, à un potentiel électrique dont la valeur est légèrement inférieure au potentiel d'oxydo-réduction de l'ion métallique à déposer et, enfin, à répéter, le cas échéant, la dernière étape en mettant en place une ou des cathode(s) en un autre métal et en réajustant le potentiel de la cathode et la différence de potentiel anode/cathode à de nouvelles valeurs, fonction du type de nouveau métal à récupérer.

Il est ainsi possible de récupérer successivement plusieurs métaux différents fixés sur une même résine utilisée pour le traitement de liquides chargés en ions et/ou en complexes métalliques.

La résine cationique ou anionique traitée et régénérée pourra soit se présenter sous la forme d'une substance semi-liquide pouvant être mélangée avec la solution éluante régénératrice, soit sous la forme d'une substance fixée sur un substrat solide sur lequel on fait passer les effluents ou bains à traiter par percolation.

Selon une première caractéristique de l'invention, la différence de potentiel constante entre anode(s) et cathode(s), pendant les phases d'électrolyse active avec dépôt métallique, est proche, en valeur, de la valeur limite pour la conduction de l'électrolyte formé par la solution éluante chargée en complexes métalliques ou par le mélange résine/solution éluante chargée, le courant électrique appliqué étant de forme continue, redressée double alternance, carrée, triangulaire, rectangulaire ou pulsée.

Ces formes précitées de courants modulés permettent d'ajuster la vitesse de déroulement de l'électrolyse à la vitesse de déroulement des réactions liées à l'élution, rendant ainsi le procédé plus économique et évitant la dégradation du complexant ou ligand durant l'électrolyse.

De manière avantageuse, le solvant polaire utilisé présente une constante diélectrique comprise entre 24 et 120, et la résine préférentiellement cationique consiste en une résine du type choisi dans le groupe formé par les résines à caractère faiblement ou fortement acide et les zéolithes, ledit procédé de séparation et de récupération étant conduit à une température comprise entre - 30° C et + 300° C, préférentiellement entre + 20° C et + 200° C et optimalement entre + 20° C et + 90° C.

Selon l'invention, le courant électrique appliqué aux électrodes est modulé en amplitude en fonction du temps et aboutit à une électrolyse discontinue comprenant des phases d'arrêt du dépôt métallique, pendant lesquelles le potentiel appliqué à la ou aux cathode(s) est tout juste supérieur au potentiel d'équilibre du voltamètre renfermant l'électrolyte formé par le mélange résine/solution éluante, alternées avec des phases actives de dépôt, pendant lesquelles le potentiel de la ou des cathode(s) est porté à une valeur correspondant à celle du pallier de diffusion apparent des complexes à électrolyser et renfermant les ions métalliques à récupérer, préférentiellement à une valeur située sensiblement au milieu ou à la fin dudit pallier, les durées et les rapports des durées des deux phases étant déterminées de telle manière que l'électrolyse soit synchronisée avec la réaction d'élution.

Un tel mode opératoire de l'électrolyse, à savoir avec un courant modulé, permet d'aboutir à un très bon état de surface du dépôt métallique, à un bon rendement en courant et à une absence presque totale de toute décomposition de l'électrolyte.

Les opérations d'élution/régénération et d'électrolyse peuvent être effectuées, soit de manière simultanée, moyennant notamment une électrolyse à courant modulé comme décrite précédemment, soit de manière successive, en ne débutant l'électrolyse qu'après achèvement de l'élution.

Le procédé décrit ci-dessus permet notamment d'aboutir à une haute sélectivité de la séparation des métaux, à un très bon état de surface du dépôt métallique, à une très bonne pureté et à un très bon état de surface de ce dépôt, à un bon rendement en courant et à une absence presque totale de toute décomposition de l'électrolyte, ainsi qu'à une utilisation optimale en termes d'efficacité de l'installation utilisée pour le traitement considéré.

La sélectivité du procédé de séparation selon l'invention pourra par conséquent être ajustée en agissant sur quatre paramètres ou facteurs, à savoir, la nature et les caractéristiques de la résine et de l'éluant ou du mélange d'éluants, les caractéristiques de la membrane du voltamètre et les caractéristiques des potentiels et des courants d'électrolyse, ainsi que leur évolution dans le temps.

L'invention a également pour objet un procédé de traitement et de recyclage d'au moins certains effluents rejetés par les laboratoires et/ou ateliers de développement photographique, notamment les bains photographiques usés par exemple de fixage ou de blanchiment/fixage, en particulier du type connu sous la désignation RA4 de la société KODAK.

Ce procédé de traitement et de recyclage, avec récupération de l'argent sous forme métallique, consiste essentiellement à faire passer lesdits effluents, en particulier bains photographiques et/ou eaux de lavage des films, sur une résine cationique échangeuse d'ions, sélective par rapport à l'argent et apte à le fixer sous forme de nouveaux complexes différents de ceux présents dans lesdits effluents, puis à régénérer ladite résine par élution de l'argent dans une solution régénérante renfermant un ligand apte à séparer l'argent de la résine et à le lier par complexage et, enfin, à réaliser, successivement à ou simultanément avec la régénération, une électrolyse de la solution régénérante de manière à récupérer l'argent sous forme métallique.

Les opérations de régénération/élution et d'électrolyse sont avantageusement réalisées telles que décrites précédemment en relation avec le procédé de séparation précité.

Afin d'optimiser, d'une part, la fixation des ions d'argent par la résine cationique lors de l'opération de désargentage, de telle manière que ladite résine opère dans des conditions favorables à une fixation massive et, d'autre part, la libération des ions d'argent de ladite résine et leur complexage par la solution éluante lors de l'opération de régénération de la résine, la fixation de l'argent par la résine est avantageusement réalisée en milieu basique et la régénération de ladite résine est réalisée en milieu acide, le complexe résine-argent étant stable ou très stable en milieu alcalin et peu stable en milieu acide.

A cet effet, il peut être prévu que le pH du bain ou des eaux traité(es) soit ajusté, d'une part, avant passage sur la résine échangeuse d'ions, par ajout d'une base, par exemple $NH_4OH$, à une valeur comprise entre 8 et 10, préférentiellement d'environ 9 et, d'autre part, après passage sur la résine échangeuse d'ions et avant recyclage, à sa valeur initiale avant traitement, par ajout d'un acide minéral ou organique n'altérant pas les composants des effluents ou bains à recycler et ne réduisant pas le métal à récupérer, tel que par exemple $H_2SO_4$, HCl ou $CH_3COOH$.

Selon un mode de réalisation préféré de l'invention, la résine utilisée est une résine cationique, à caractère faiblement acide, formée d'un substrat polymère portant des fonctions thiols, des fonctions acides forts et/ou des fonctions comportant des atomes d'azote et de soufre comme donneurs d'électrons, tels que des groupements 1,3-diphényle - 2-thiourée, 2-mercaptobenzimidazole ou p-diméthylaminobenzylidenrhodamine.

Le substrat de base pourra présenter une structure macroporeuse et être formé de polystyrène réticulé par du divinylbenzène (DVB).

Ladite résine pourra en variante également être formée d'un substrat à base de polymères m-aminophénols portant des groupements dithiocarbamates.

En tout état de cause, la résine cationique utilisée devra fixer de manière très sélective uniquement les ions d'argent et ne devra pas réagir de manière notable avec les autres constituants des bains ou des eaux à traiter.

A titre d'exemples, la résine cationique utilisée pourra être du type connu sous la désignation Imac TMR ou Imac GT73 commercialisés par la société ROHM & HAAS.

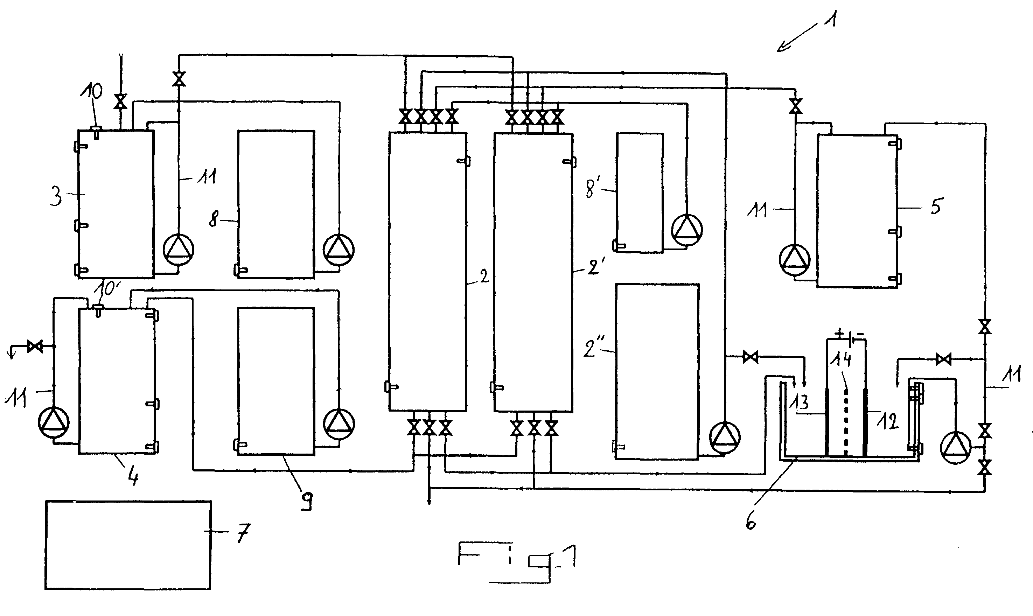

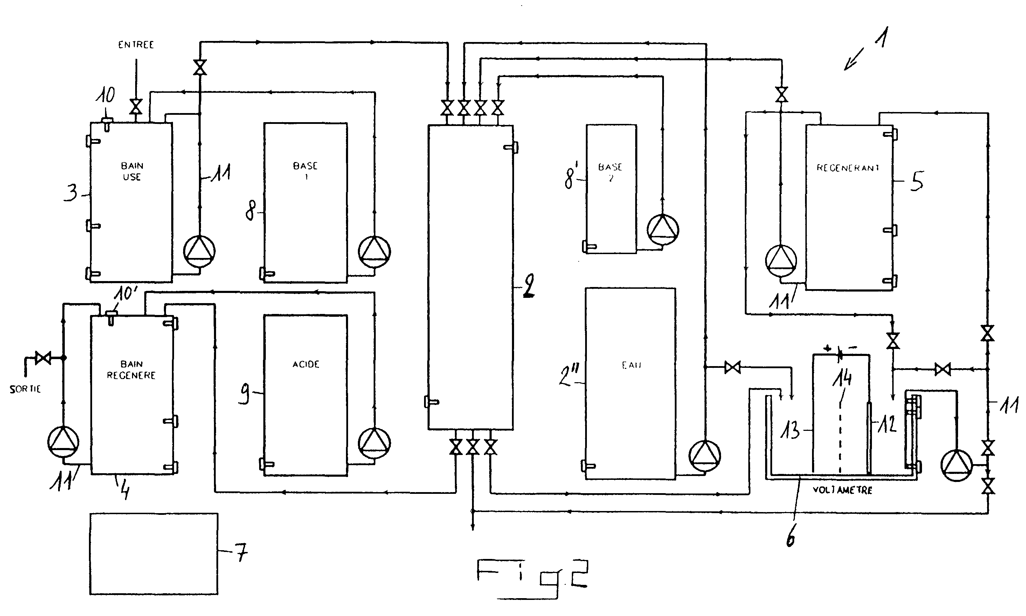

Comme le montrent les figures 1 et 2 des dessins annexés, les opérations de désargentage du bain usé ou des eaux de lavage et de régénération de la résine par la solution régénérante sont réalisées par percolations successives sur ladite résine dans un même contenant 2, 2'.

En vue d'optimiser les performances de la résine cationique, celle-ci est avantageusement préneutralisée par une base forte à un pH compris entre 8 et 10, préférentiellement par $NH_4OH$ à un pH d'environ 9, cette base servant également à l'ajustage du pH du bain usé avant passage sur la résine. Toutefois, la base utilisée peut plus généralement être constituée par une base minérale ou organique quelconque, telle que NaOH, KOH, les amines (par exemple : l'éthanolamine), les bases aminées substituées (par exemple : l'hydroxyde de tétrabutylammonium), les bases organiques fortes (par exemple : la lysine) ou encore les bases pyrinidiques (par exemple : la pyridine).

Conformément à une caractéristique de l'invention, il peut être prévu que, durant la phase de régénération, le pH de la solution régénérante soit au plus égal à 4, cette dernière renfermant un acide ne réagissant pas avec le ligand ou complexant présent dans ladite solution régénérante et ne dissolvant pas l'argent sous forme métallique.

On pourra par exemple utiliser un acide minéral tel que HCl concentré (32 %) ou $H_2SO_4$ dilué (0,1 N) ou à 32 %. Néanmoins, il est également possible d'utiliser soit un acide organique ayant un $pK_a$ suffisant (par exemple l'acide acétique), soit des mélanges d'acides minéraux et organiques définis en vue de faciliter la solubilité des complexes formés.

Le complexant ou ligand contenu dans la solution régénérante peut être constitué par un ligand minéral ou organique quelconque, formant en milieu acide un ou plusieurs complexes avec l'argent, dont la structure est plus stable que celle du complexe argent/résine.

Le complexant ou ligand, ou mélange de complexants ou ligands, utilisé devra fixer sélectivement les ions d'argent et ne pas ou très peu réagir avec les autres composés ou substances présentes dans le ou les échangeurs durant la phase de régénération.

A titre préférentiel, le ligand ou complexant présent dans la solution régénérante est choisi dans le groupe formé par la thiourée, la thiamine et HCl, la concentration en molécules de ligand ou de complexant étant telle qu'on aboutit à un rapport (molécules de ligand/molécules d'argent) supérieur à environ 4.

On remarquera qu'en utilisant comme ligand HCl, ce dernier remplit simultanément le rôle de l'acide au cours de la régénération de la résine.

De manière générale, le ligand ou complexant doit être utilisé en grand excès par rapport au métal (argent) puisqu'il se forme d'abord des complexes comportant peu de ligands dans la molécule (par exemple deux par atome de métal) et que la pratique montre que la solubilité de ces entités chimiques est relativement faible dans les solutions régénérantes utilisées, alors qu'elles se solubilisent aisément dans un excès de complexant du fait de la formation de complexes comportant un nombre plus grand de ligands dans la molécule (par exemple quatre ligands par atome de métal).

A titre d'exemple pratique de solution régénérante, il peut être prévu une solution régénérante comportant entre 30 et 35 %, préférentiellement environ 32 % (pondéral), de $H_2SO_4$ et entre 10 et 20 %, préférentiellement environ 15 % (% / poids / volume), de thiourée avec une valeur de rapport en volumes de 4/1 pour le rapport volume de régénérant / volume de résine.

Les opérations de régénération et d'électrolyse sont effectuées, en vue d'obtenir une vitesse de réaction maximale et un rendement optimisé, à des températures comprises entre 30° C et 50° C, préférentiellement entre 30° C et 40° C.

De plus, l'électrolyse est préférentiellement effectuée à un pH compris entre 0 et 5, préférentiellement entre 0 et 1, sous agitation énergique en flux laminaire ou turbulent, sous atmosphère protectrice en cas d'utilisation d'un ligand ou complexant sensible à l'air et en surveillant la variation du courant d'électrolyse, de manière à repérer sa chute sous une valeur seuil prédéterminée entraînant l'arrêt de l'électrolyse (méthode dite de "chronoampérométrie").

Afin de tendre vers un rejet quasi nul ou au moins des rejets non polluants, il peut être prévu que les eaux de lavage ou de rinçage résultant du désargentage, ainsi que les eaux de lavage des films ayant subi une opération de désargentage, soient traitées par augmentation de leur pH à 12 ou plus, par exemple par ajout d'eau oxygénée, puis filtrage et, enfin, rétablissement de leur pH à environ 7.

L'eau oxygénée ou la substance analogue ne sera préférentiellement additionnée qu'après ajustage du pH des eaux dans une plage comprise entre 5 et 7, suivi d'une période d'attente.

Les eaux usées résultant du désargentage sont donc dans un premier temps intégralement désargentées par passage sur la résine échangeuse d'ions en début du cycle de traitement suivant, pour ensuite être purgées à l'égout après avoir été mises à un pH supérieur à 12 par ajout de NaOH (pour précipiter le fer présent sous forme d'hydroxyde ferrique), filtrées et remises à un pH d'environ 7 par ajout de HCl. Le complexe Fer - EDTA est ainsi détruit et on élimine simultanément une partie des sulfates et des acétates, susceptibles de s'accumuler avec la répétition du procédé.

Les eaux de lavage des films sont, quant à elles, soumises à une opération de désargentage après ajustement de leur pH et préneutralisation de la résine.

La presque totalité de l'argent présent dans ces eaux est fixée et la teneur de ce dernier tombe en-dessous de 0,04 ppm, ce qui autorise la mise à l'égout de ladite eau.

Si l'on veut éviter de rejeter une eau présentant une DCO importante et contenant le complexe Fer - EDTA non biodégradable, on peut faire suivre l'opération de désargentage précitée par le traitement complémentaire décrit ci-dessus pour les eaux de lavage et de rinçage résultant du désargentage, en additionnant, avant la précipitation du fer, un oxydant tel que de l'eau oxygénée ou du peroxodisulfate de sodium en quantité stoechiométrique par rapport à la DCO et en chauffant ladite eau à une température comprise entre 30 °C et 90 °C.

Il est également possible, pour éviter tout rejet d'eaux de lavage de films et pour recycler intégralement celles-ci, de faire suivre les traitements ci-dessus par un passage desdites eaux traitées sur un échangeur anionique, puis sur un échangeur cationique, avant leur réutilisation pour le lavage de films.

Pour maintenir la minéralisation requise, il est souhaitable de procéder à une addition dosée d'eau potable non traitée du réseau. En outre, en isolant les contenants formant échangeurs anionique et cationique, il est également possible de récupérer une grande partie des calories véhiculées par lesdites eaux de lavage (environ 70 % par la mise en place d'un échangeur de chaleur sur un circuit de recirculation).

De même, les eaux de rinçage ou de lavage des résines et des contenants correspondants après régénération sont traitées par évaporation sous vide de manière à obtenir une solution restante ayant une concentration en argent sensiblement équivalente à celle de la solution régénérante renfermant l'argent à l'état élué après passage sur la résine chargée, ladite solution restante étant ensuite traitée par électrolyse et l'eau distillée obtenue lors de la phase de concentration par évaporation étant réinjectée dans un réservoir de stockage des eaux de rinçage et de lavage, pour resservir au lavage desdits contenants (échangeur 2, 2' et cuve à électrolyse 6).

Enfin, l'invention a également pour objet une installation pour le traitement et le recyclage des bains de fixage ou de blanchiment-fixage et, éventuellement, des eaux de lavage en photographie, destinée en particulier à la mise en oeuvre des procédés tels que décrits précédemment et représentés aux figures 1 et 2 des dessins annexés.

Cette installation 1 est principalement constituée d'au moins un échangeur 2, 2' en colonne relié, respectivement, à un réservoir 3 pour bain usé à traiter, à un réservoir 4 pour bain traité, à un réservoir 5 de solution régénérante et à au moins un voltamètre 6, par l'intermédiaire de conduits correspondants équipés d'organes de coupure et, le cas échéant, de moyens de transfert actif de liquides adaptés, l'ensemble desdits organes et moyens de transfert étant contrôlés et commandés par une unité centrale de gestion 7.

On notera sur les figures annexées que les différents contenants 2, 2', 2", 3, 4, 5, 6, 8, 8' et 9 sont pourvus chacun de détecteurs de niveaux bas et haut, ainsi qu'éventuellement de détecteurs de niveaux intermédiaires permettant une gestion fiable du remplissage desdits contenants, ainsi que des transferts des liquides entre ces derniers.

Conformément à une caractéristique de l'invention, représentée aux figures 1 et 2 des dessins annexés, le réservoir 3 à bain usé est alimenté en base à partir d'un contenant 8 correspondant et le réservoir 4 à bain traité est alimenté en acide à partir d'un contenant 9 correspondant, les actionnements des organes de coupure et, le cas échéant, des moyens de transfert contrôlant l'alimentation en base ou en acide desdits réservoirs 3 et 4 étant commandés par un ou des modules respectifs de régulation du pH respectifs 10, 10' relevant en permanence les pH desdits réservoirs 3 et 4.

Comme le montrent également les figures 1 et 2 des dessins annexés, l'échangeur ou les échangeurs 2, 2' sont également reliés à un réservoir 2" à eau de rinçage ou de lavage, les réservoirs 3, 4 et 5 à bain usé, à bain traité et à solution régénérante, ainsi que le voltamètre 6, étant pourvus de circuits 11 de recirculation en boucles fermées.

De plus, il peut également être prévu un réservoir supplémentaire 8' de stockage de la base utilisé pour la préneutralisation de la résine.

Lorsque la régénération de la résine et l'électrolyse sont réalisées en deux étapes séparées et successives, il peut être prévu de rajouter un réservoir de stockage supplémentaire pour la solution régénérante saturée en argent (non représenté). Au cours de l'électrolyse on établit alors un circuit en boucle fermée entre ce réservoir supplémentaire et le voltamètre 6 jusqu'à extraction de la totalité de l'argent dissout, la solution régénérante régénérée (c'est-à-dire débarrassée de l'argent) étant ensuite transférée vers le réservoir 5 de stockage de solution régénérante active.

En outre, l'ensemble de l'installation 1 pourra être disposé sur un bâti formant simultanément bac de rétention et intégrant un caisson de protection compartimenté renfermant les différentes composantes fonctionnelles de ladite installation.

On décrira ci-après, de manière plus précise, et en référence aux figures 1 ou 2 annexées, le déroulement des trois étapes du procédé de traitement et de recyclage conforme à l'invention.

Le bain usé ou les eaux de lavage de films récupéré(es) est (sont) dans un premier temps stocké(es) dans un réservoir 3, dans lequel leur pH est ajusté à une valeur alcaline par addition de base provenant du contenant 8.

La réoxydation du complexe Fe III - EDTA se fait par contact avec l'air, favorisée par les turbulences générées dans les réservoirs 3 et 4 munis de circuits de recirculation 11.

Lors du passage du bain usé ou des eaux à traiter sur la résine échangeuse d'ions dans le ou les échangeurs 2, 2', un capteur électrochimique détecte l'apparition des premières traces d'argent à la sortie de la résine ou du ou des échangeurs, ce qui entraîne l'arrêt de la percolation de la résine et enclenche son lavage par de l'eau de rinçage issue du réservoir 2".

Ce rinçage n'entraîne pratiquement aucun rejet de substances non-biodégradables du fait du traitement des eaux décrit précédemment et permet au procédé de fonctionner à volume pratiquement constant, l'ajustage du pH en amont et en aval dudit procédé, ainsi que la compensation des pertes en sulfites et en thiosulfates, ne provoquant qu'une augmentation de volume d'environ 6 % du bain régénéré par rapport au bain usé.

Après rinçage de la résine, on réalise un transfert de solution régénérante et éluante dans le ou les échangeurs 2, 2', ladite solution libérant ladite résine des ions d'argent fixés sur elle, au cours de son passage par percolation à travers ladite résine.

Comme le montre la comparaison entre les figures 1 et 2 des dessins annexés, l'installation 1 pourra comporter soit un seul échangeur 2, soit deux échangeurs 2 et 2' en fonction du mode opératoire envisagé.

En présence d'un seul échangeur, la régénération de la résine est séparée dans le temps par rapport à l'électrolyse de la solution régénérante chargée en argent.

Dans ce cas, on fait circuler à travers l'échangeur 2 une solution régénérante très concentrée en acide et en complexant et en quantité suffisante pour éluer la totalité de l'argent fixé sur la résine contenue dans ledit échangeur 2.

Il se produit alors dans l'échangeur 2 une "chromatographie de front" dans laquelle le pic d'élution est très raide puisque l'argent est chassé en ligne devant la vague d'éluant injectée dans ledit échangeur 2 (dans la pratique : observation d'un front Ag traversant progressivement toute la longueur de l'échangeur).

Lorsque la totalité de l'argent est élué, la solution régénérante est transférée dans un réservoir de stockage supplémentaire (non représenté) et on procède comme indiqué précédemment.

Puis, l'échangeur 2 est lavé à l'eau pour nettoyer la résine des restes de complexe d'argent, de l'acide et de l'excès de complexant, cette eau de lavage étant ensuite traitée comme indiqué précédemment et la résine pouvant être reconditionnée en vue d'une nouvelle opération de désargentage de bain usé ou d'eaux de lavage de films.

Ce mode opératoire permet d'assurer une remise en service très rapide de l'échangeur 2, de réaliser l'électrolyse séparément sans nécessiter de synchronisation et de pouvoir être effectué avec un investissement limité à un seul échangeur.

En présence de deux échangeurs 2 et 2' (figure 1), les opérations de régénération de la résine et de récupération de l'argent par électrolyse sont opérées simultanément, la solution régénérante circulant entre les échangeurs 2 et 2' et le voltamètre 6 dans lequel l'argent se dépose au fur et à mesure de son élution. Dès la fin de ces opérations, déterminée par le contrôle des paramètres chronoampérométriques de l'électrolyse, les différents contenants sont lavés comme mentionné précédemment.

L'avantage de ce deuxième mode de réalisation à deux échangeurs est de pouvoir disposer d'une installation 1 travaillant en continu, l'un des échangeurs pouvant toujours être en phase de désargentage, tandis que l'autre est en phase de régénération.

En outre, on dispose de plus de temps pour réaliser l'électrolyse et il n'est pas nécessaire de disposer d'une solution régénérante très concentrée en acide et en complexant.

Par ailleurs, l'électrolyse n'étant jamais interrompue, on obtient une meilleure qualité du métal déposé.

Le voltamètre 6 dans lequel est opérée l'électrolyse est constitué, par exemple, d'un bac en une matière résistant aux différents constituants de l'électrolyte, préférentiellement en une matière plastique chimiquement inerte, dans lequel sont disposées de manière alternée des cathodes 12 et des anodes 13.

Lesdites cathodes 12 du voltamètre consistent en des tôles minces en argent, et les anodes 13 en des plaques de graphite, lesdites électrodes alternées étant mutuellement distantes d'environ 3 à 15 mm, préférentiellement d'environ 8 mm, et séparées, au niveau de chaque couple d'électrodes 12, 13 opposées, par un diaphragme 14 sous forme de membrane échangeuse d'ions du type cationique, le ou les compartiment(s) renfermant l'anode ou les anodes 13 étant rempli(s) d'une solution fortement acide.

Cette dernière disposition permet d'éviter la dégradation du complexant et du complexe dissous dans la solution régénérante formant électrolyte (par migration électrostatique vers l'anode), et ainsi une consommation d'énergie excessive, un dépôt de métal de qualité médiocre, une surconsommation de complexant et un encrassement du voltamètre 6.

En ce qui concerne les conditions physiques de réalisation de l'électrolyse, il convient de noter que cette dernière est avantageusement conduite à une température comprise entre 10° C et 60° C, préférentiellement entre 30° C et 40° C, avec une densité de courant en début d'électrolyse comprise entre 0,05 et 3 A/dm$^2$, préférentiellement

entre 0,2 et 0,5 A/dm$^2$, avec un pH de l'électrolyte compris entre 0 et 5, préférentiellement entre 0 et 1 et avec une agitation laminaire ou turbulente dudit électrolyte.

Les compartiments anodiques constitués par les diaphragmes 14 peuvent être préférentiellement remplis d'acide sulfurique à 32 %, alors que les compartiments cathodiques comprennent la solution régénérante chargée en argent.

Selon une caractéristique supplémentaire de l'invention, il est possible de scinder l'installation 1 en deux parties localisées en des emplacements distincts, à savoir une première unité de désargentage à installer chez les photographes ou les développeurs et une seconde unité de régénération et d'électrolyse installée dans une société sous-traitante spécialisée.

Une telle structure de l'installation limite les investissements, les manipulations et la maintenance au niveau des photographes et des développeurs et permet de réduire le coût de la régénération du fait d'un traitement en grands volumes, cette opération de haute technicité nécessitant, en outre, un personnel très qualifié.

Grâce à l'invention, il est possible de réaliser un procédé et une installation de traitement et de recyclage de bain photographique et d'eaux de lavage de films générant très peu de rejets, dont les rendements sont nettement plus élevés que ceux des procédés existants et permettant d'aboutir à des taux de récupération d'environ 100 % pour l'argent, d'environ 94 % pour les thiosulfates, d'environ 100 % pour les sulfites et d'environ 90 % pour le complexe Fe III - EDTA.

Ces résultats obtenus avec le procédé selon l'invention sont notamment dus aux choix spécifiques des composés actifs (notamment résine et solution régénérante) et des modes opératoires utilisés, ainsi qu'à la sélectivité élevée existant à chaque étape opératoire du procédé (désargentage, régénération, électrolyse).

En outre, il a été constaté, au cours d'essais répétés, que la capacité de fixation de la résine (capacité opérationnelle et capacité totale) utilisée n'est pratiquement pas affectée après dix cycles consécutifs de désargentage.

Par ailleurs, des tests photométriques effectués sur un bain de blanchiment/fixage du type RA4 ayant subi dix régénérations par l'intermédiaire du procédé selon l'invention a permis de constater que ce bain répondait encore aux normes et permettait des développements de photographies de bonne qualité et stables dans le temps.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

**Revendications**

1. Procédé de séparation d'ions métalliques absorbés sur une résine échangeuse d'ions, consistant à mettre en suspension ou à percoler la résine, préférentiellement cationique, chargée avec un solvant polaire contenant un agent d'élution ou un mélange d'agents d'élution renfermant au moins un ligand organique ou minéral apte à complexer les ions métalliques à séparer. à faire circuler un courant électrique continu, constant ou non, dans la solution éluante chargée en complexes métalliques ou dans le mélange résine/solution éluante chargée formant électrolyte entre au moins une cathode en un métal identique à celui des ions métalliques à récupérer par dépôt et au moins une anode en un matériau inerte dans les conditions physico-chimiques données, en maintenant la cathode à un potentiel électrique dont la valeur est légèrement inférieure au potentiel d'oxydo-réduction de l'ion métallique à déposer pendant les phases actives de dépôt et, enfin, à répéter la dernière étape en mettant en place une ou des cathode(s) en un autre métal et en réajustant le potentiel de la cathode et la différence de potentiel anode/cathode à de nouvelles valeurs, fonction du type de nouveau métal à récupérer, le courant électrique appliqué aux électrodes étant modulé en amplitude en fonction du temps et aboutissant à une électrolyse discontinue comprenant des phases d'arrêt du dépôt métallique, pendant lesquelles le potentiel appliqué à la ou aux cathode(s) est tout juste supérieur au potentiel d'équilibre du voltamètre renfermant l'électrolyte formé par le mélange résine/solution éluante, alternées avec des phases actives de dépôt, pendant lesquelles le potentiel de la ou des cathode(s) est porté à une valeur correspondant à celle du pallier de diffusion apparent des complexes à électrolyser et renfermant les ions métalliques à récupérer, les durées et les rapports des durées des deux phases étant déterminées de telle manière que l'électrolyse soit synchronisée avec la réaction d'élution.

2. Procédé selon la revendication 1, **caractérisé en ce que** la différence de potentiel constante entre anode(s) et cathode(s) est proche, en valeur, de la valeur limite pour la conduction de l'électrolyte formé par la solution éluante chargée en complexes métalliques ou par le mélange résine/solution éluante chargée et **en ce que** le courant électrique appliqué est de forme continue, redressée double alternance, carrée, triangulaire, rectangulaire ou pulsée.

3. Procédé selon l'une quelconque des revendications 1 et 2, **caractérisé en ce que** le solvant polaire utilisé présente une constante diélectrique comprise entre 24 et 120, **en ce que** la résine cationique est une résine du type choisie dans le groupe formé par les résines à caractère faiblement ou fortement acide et les zéolithes et **en ce que** ledit procédé est conduit à une température comprise entre - 30° C et + 300° C, préférentiellement entre + 20° C et + 200° C.

4. Procédé selon l'une quelconque des revendications 1 à 3. **caractérisé en ce que**, pendant les phases actives de dépôt, le potentiel de la ou des cathode(s) est porté à une valeur située sensiblement au milieu ou à la fin du pallier de diffusion apparent des complexes à électrolyser et renfermant les ions métalliques à récupérer.

5. Procédé de traitement et de recyclage d'au moins certains effluents rejetés par les laboratoires et/ou ateliers de développement photographique, notamment les bains photographiques usés par exemple de fixage ou de blanchiment/fixage, consistant à faire passer lesdits effluents, en particulier bains photographiques et/ou eaux de lavage des films, sur une résine cationique échangeuse d'ions, sélective par rapport à l'argent et apte à le fixer sous forme de nouveaux complexes différents de ceux présents dans lesdits effluents. puis à régénérer ladite résine par élution de l'argent dans une solution régénérante renfermant un ligand apte à séparer l'argent de la résine et à le lier par complexage et, enfin, à réaliser, successivement ou simultanément avec la régénération, une électrolyse de la solution régénérante de manière à récupérer l'argent sous forme métallique, les opérations de régénération/élution et d'électrolyse étant réalisées selon le procédé de séparation suivant l'une quelconque des revendications 1 à 4.

6. Procédé selon la revendication 5, **caractérisé en ce que** la fixation de l'argent par la résine est réalisée en milieu basique et **en ce que** la régénération de ladite résine est réalisée en milieu acide, le complexe résine-argent étant très stable en milieu alcalin et peu stable en milieu acide.

7. Procédé selon l'une quelconque des revendications 5 et 6, **caractérisé en ce que** le pH du bain ou des eaux traité (s) est ajusté, d'une part, avant passage sur la résine échangeuse d'ions, par ajout d'une base, par exemple $NH_4OH$, à une valeur comprise entre 8 et 10, préférentiellement d'environ 9 et, d'autre part, après passage sur la résine échangeuse d'ions et avant recyclage, à sa valeur initiale avant traitement, par ajout d'un acide minéral ou organique n'altérant pas les composants des effluents à recycler et ne réduisant pas le métal à récupérer, tel que par exemple $H_2SO_4$, HCl ou $CH_3$ COOH.

8. Procédé selon l'une quelconque des revendications 5 et 7,
**caractérisé en ce que** la résine utilisée est une résine cationique, à caractère faiblement acide, formée d'un substrat polymère portant des fonctions thiols, des fonctions acides forts et/ou des fonctions comportant des atomes d'azote et de soufre comme donneurs d'électrons, tels que des groupements 1,3-diphényle - 2-thiourée, 2-mercaptobenzimidazole ou p-diméthylaminobenzylidenrhodamine.

9. Procédé selon la revendication 8, **caractérisé en ce que** le substrat de base a une structure macroporeuse et est formé de polystyrène réticulé par du divinylbenzène (DVB).

10. Procédé selon la revendication 8, **caractérisé en ce que** la résine est formée d'un substrat à base de polymères m-aminophénols portant des groupements dithiocarbamates.

11. Procédé selon l'une quelconque des revendications 5 à 10, **caractérisé en ce que** la résine est préneutralisée par une base forte à un pH compris entre 8 et 10, préférentiellement par $NH_4OH$ à un pH d'environ 9.

12. Procédé selon l'une quelconque des revendications 5 à 11, **caractérisé en ce que** les opérations de désargentage du bain usé ou des eaux de lavage et de régénération de la résine par la solution régénérante sont réalisées par percolations successives sur ladite résine dans un même contenant.

13. Procédé selon l'une quelconque des revendications 5 à 12, **caractérisé en ce que**, durant la phase de régénération, le pH de la solution régénérante est au plus égal à 4, cette dernière renfermant un acide ne réagissant pas avec le ligand ou complexant présent dans ladite solution régénérante.

14. Procédé selon l'une quelconque des revendications 5 à 13, **caractérisé en ce que** le ligand ou complexant présent dans la solution régénérante est choisi dans le groupe formé par la thiourée, la thiamine et HCl, la concentration en molécules de ligand ou de complexant étant telle qu'on aboutit à un rapport (molécules de ligand/molécules d'argent) supérieur à environ 4.

15. Procédé selon l'une quelconque des revendications 5 à 13, **caractérisé en ce que** les opérations de régénération et d'électrolyse sont effectuées à des températures comprises entre 30° C et 50° C, préférentiellement entre 30° C et 40° C.

16. Procédé selon l'une quelconque des revendications 5 à 15, **caractérisé en ce que** l'électrolyse est effectuée à un pH compris entre 0 et 5, préférentiellement entre 0 et 1, sous agitation énergique en flux turbulent, sous atmosphère protectrice en cas d'utilisation d'un ligand ou complexant sensible à l'air et en surveillant la variation du courant d'électrolyse, de manière à repérer sa chute sous une valeur seuil prédéterminée entraînant l'arrêt de l'électrolyse.

17. Procédé selon l'une quelconque des revendications 5 à 16, **caractérisé en ce que** les eaux de lavage ou de rinçage résultant du désargentage, ainsi que les eaux de lavage des films ayant subi une opération de désargentage. sont traitées par augmentation de leur pH à 12 ou plus, par exemple par addition d'eau oxygénée, puis filtrage et, enfin, rétablissement de leur pH à environ 7.

18. Procédé selon l'une quelconque des revendications 5 à 16, **caractérisé en ce que** les eaux de rinçage ou de lavage des résines et des contenants correspondants après régénération sont traitées par évaporation sous vide de manière à obtenir une solution restante ayant une concentration en argent sensiblement équivalente à celle de la solution régénérante renfermant l'argent à l'état élué, ladite solution restante étant ensuite traitée par électrolyse et l'eau distillée obtenue lors de la phase de concentration par évaporation étant réinjectée dans un réservoir de stockage des eaux de rinçage et de lavage.

19. Installation pour le traitement et le recyclage des bains de fixage ou de blanchiment-fixage et, éventuellement, des eaux de lavage en photographie. destinée en particulier à la mise en oeuvre du procédé selon l'une quelconque des revendications 5 à 17, installation principalement constituée d'au moins un échangeur (2, 2') d'ions relié, respectivement, à un réservoir (3) pour bain usé à traiter, à un réservoir (4) pour bain traité, à un réservoir (5) de solution régénérante et à au moins un voltamètre (6), par l'intermédiaire de conduits correspondants équipés d'organes de coupure et, le cas échéant, de moyens de transfert actif de liquides adaptés, l'ensemble desdits organes et moyens de transfert étant contrôlés et commandés par une unité centrale de gestion (7), les cathodes (12) du voltamètre (6) consistant en des tôles minces en argent, et les anodes (13) en des plaques de graphite, lesdites électrodes alternées étant mutuellement distantes de 3 à 15 mm, préférentiellement d'environ 8 mm, et séparées, au niveau de chaque couple d'électrodes (12, 13) opposées, par un diaphragme (14) sous forme de membrane échangeuse d'ions du type cationique, le ou les compartiment(s) renfermant l'anode ou les anodes (13) étant rempli(s) d'une solution fortement acide.

20. Installation selon la revendication 19, **caractérisée en ce que** le réservoir (3) à bain usé est alimenté en base à partir d'un contenant (8) correspondant et le réservoir (4) à bain traité est alimenté en acide à partir d'un contenant (9) correspondant, les actionnements des organes de coupure et, le cas échéant, des moyens de transfert contrôlant l'alimentation en base ou en acide desdits réservoirs (3 et 4) étant commandés par un ou des modules respectifs de régulation du pH respectifs (10, 10') relevant en permanence les pH desdits réservoirs (3 et 4).

21. Installation selon l'une quelconque des revendications 19 et 20, **caractérisée en ce que** l'échangeur ou les échangeurs (2, 2') d'ions sont également reliés à un réservoir à eau de rinçage ou de lavage, les réservoirs (3, 4 et 5) à bain usé, à bain traité et à solution régénérante, ainsi que le voltamètre (6), étant pourvus de circuits (11) de recirculation en boucles fermées.

**Patentansprüche**

1. Verfahren zur Abtrennung von Metallionen, die auf einem Ionenaustauschharz absorbiert sind, bestehend aus dem Aufschlämmen oder Perkolieren des vorzugsweise kationischen Harzes, welches mit einem polaren Lösungsmittel beladen ist, das ein Elutionsmittel oder ein Gemisch von Elutionsmitteln enthält, welches mindestens einen organischen oder mineralischen Liganden enthält, der geeignet ist, um die zu trennenden Metallionen zu komplexieren, aus dem Umlaufenlassen eines elektrischen Gleichstroms, der konstant ist oder nicht, in der mit Metallkomplexen beladenen Elutionslösung oder in dem Gemisch Harz/beladene Elutionslösung, wobei zwischen mindestens einer Kathode aus einem zu jenem der durch Abscheidung wiederzugewinnenden Metallionen identischen Metall und mindestens einer Anode aus einem inerten Material unter den gegebenen physikalisch-chemischen Bedingungen ein Elektrolyt gebildet wird, indem die Kathode während der aktiven Phasen der Abscheidung auf einem elektrischen Potential gehalten wird, dessen Wert geringfügig unter dem Potential der Oxidations-Reduktion des abzuscheidenden Metallions liegt, und schließlich aus dem Wiederholen des letzten Schritts durch Anbringen von (einer) Kathode(n) aus einem anderen Metall und durch erneutes Einstellen des Potentials der Kathode und der Potentialdifferenz Anode/Kathode auf neue Werte in Abhängigkeit von der Art des neuen wiederzugewinnenden Metalls, wobei der an die Elektroden angelegte elektrische Strom als Funktion der Zeit amplitudenmoduliert wird und zu einer diskontinuierlichen Elektrolyse führt mit Stopphasen der Metallabscheidung, während welchen das an die Kathode(n) angelegte Potential gerade noch über dem Gleichgewichtspotential des Voltameters liegt, das den Elektrolyten enthält, der aus dem Gemisch Harz/Elutionslösung gebildet ist, abwechselnd mit aktiven Abscheidungsphasen, während welchen das Potential der Kathode(n) auf einen Wert gebracht wird, der jenem des zu erkennenden Diffusionsbereichs der zu elektrolysierenden Komplexe, die die wiederzugewinnenden Metallionen enthalten, entspricht, wobei die Dauern und die Verhältnisse der Dauern der zwei Phasen derart festgelegt werden, daß die Elektrolyse mit der Elutionsreaktion synchronisiert wird.

2. Verfahren nach Anspruch 1, **dadurch gekennzeichnet, daß** die konstante Potentialdifferenz zwischen Anode(n) und Kathode(n) hinsichtlich des Werts nahe dem Grenzwert für die Leitung des Elektrolyten liegt, der aus der mit Metallkomplexen beladenen Elutionslösung oder aus dem Gemisch Harz/beladene Elutionslösung gebildet ist, und daß der angelegte elektrische Strom die Form von Gleichstrom, einer gleichgerichteten Ganzwelle, eine quadratische, dreieckige, rechteckige oder Impulsform aufweist.

3. Verfahren nach einem der Ansprüche 1 und 2, **dadurch gekennzeichnet, daß** das verwendete polare Lösungsmittel eine Dielektrizitätskonstante aufweist, die zwischen 24 und 120 liegt, daß das kationische Harz ein Harz des Typs ist, der aus der Gruppe ausgewählt ist, die aus den Harzen mit schwach oder stark saurem Charakter und den Zeolithen besteht, und daß das Verfahren bei einer Temperatur zwischen -30°C und +300°C, vorzugsweise zwischen +20°C und +200°C durchgeführt wird.

4. Verfahren nach einem der Ansprüche 1 bis 3, **dadurch gekennzeichnet, daß** während der aktiven Abscheidungsphasen das Potential der Kathode(n) auf einen Wett gebracht wird, der sich etwa in der Mitte oder am Ende des zu erkennenden Diffusionsbereichs der zu elektrolysierenden Komplexe, die die wiederzugewinnenden Metallionen enthalten, befindet.

5. Verfahren zur Behandlung und zur Rückführung von zumindest bestimmten Abwässern, die von den Labors und/oder Werkstätten für fotografische Entwicklung weggeworfen werden, insbesondere der verbrauchten fotografischen Bäder beispielsweise zum Fixieren oder zum Bleichen/Fixieren, bestehend aus dem Durchfließenlassen der Abwässer, insbesondere von fotografischen Bädern und/oder Waschwassern der Filme, auf einem kationischen Ionenaustauscharz, das bezüglich des Silbers selektiv ist und zum Fixieren desselben in Foml von neuen Komplexen, die von jenen, die in den Abwässern vorliegen, verschieden sind, geeignet ist, dann Regenerieren des Harzes durch Elution des Silbers in einer Regenerierungslösung, die einen Liganden enthält, der zum Trennen des Silbers von dem Harz und zum Binden desselben durch Komplexbildung geeignet ist, und schließlich Durchführen, nacheinander oder gleichzeitig mit der Regeneration, einer Elektrolyse der Regenerierungslösung, um das Silber in Metallform zurückzugewinnen, wobei die Vorgänge zur Regeneration/Elution und zur Elektrolyse gemäß dem Trennverfahren nach einem der Ansprüche 1 bis 4 durchgeführt werden.

6. Verfahren nach Anspruch 5, **dadurch gekennzeichnet, daß** die Fixierung des Silbers durch das Harz in basischer Umgebung durchgeführt wird und daß die Regeneration des Harzes in saurer Umgebung durchgeführt wird, wobei der Komplex Harz-Silber in alkalischer Umgebung sehr stabil ist und in saurer Umgebung wenig stabil ist.

7. Verfahren nach einem der Ansprüche 5 und 6, **dadurch gekennzeichnet, daß** der pH-Wert des behandelten Bades oder der behandelten Wasser einerseits vor dem Durchgang über das Ionenaustauscharz durch Zugabe einer Base, beispielsweise $NH_4OH$, auf einen Wert zwischen 8 und 10, vorzugsweise ungefähr 9, und andererseits nach dem Durchgang über das Ionenaustauscharz und vor der Rückführung durch Zugabe einer Mineral- oder organischen Säure, die die Bestandteile der zurückzuführenden Abwässer nicht ändert und das wiederzugewinnende Metall nicht reduziert, wie beispielsweise $H_2SO_4$, HCl oder $CH_3COOH$, auf seinen Anfangswert vor der Behandlung eingestellt wird.

8. Verfahren nach einem der Ansprüche 5 und 7, **dadurch gekennzeichnet, daß** das verwendete Harz ein kationisches Harz mit schwach saurem Charakter ist, welches aus einem Polymersubstrat gebildet ist, das Mercaptangruppen, starke Säuregruppen und/oder Gruppen, die Stickstoff- und Schwefelatome als Elektronendonoren enthalten, trägt, wie die Gruppen 1,3-Diphenyl-2-thioharnstoff, 2-Mercaptobenzimidazol oder p-Dimethylaminoben-

EP 0 991 786 B1

zylidenrhodamin.

9. Verfahren nach Anspruch 8, **dadurch gekennzeichnet, daß** das Basissubstrat eine makroporöse Struktur aufweist und aus Polystyrol, das durch Divinylbenzol (DVB) vernetzt ist, gebildet ist.

10. Verfahren nach Anspruch 8, **dadurch gekennzeichnet, daß** das Harz aus einem Substrat auf der Basis von m-Aminophenol-Polymeren gebildet ist, die Dithiocarbamatgruppen tragen.

11. Verfahren nach einem der Ansprüche 5 bis 10, **dadurch gekennzeichnet, daß** das Harz durch eine starke Base mit einem pH-Wert zwischen 8 und 10, vorzugsweise durch $NH_4OH$ mit einem pH-Wert von ungefähr 9, vomeutralisiert wird.

12. Verfahren nach einem der Ansprüche 5 bis 11, **dadurch gekennzeichnet, daß** die Vorgänge der Entsilberung des verbrauchten Bades oder der Wasch- und Regenerierungswasser des Harzes durch die Regenerierungslösung durch aufeinanderfolgende Perkolationen auf dem Harz in ein und demselben Behälter durchgeführt werden.

13. Verfahren nach einem der Ansprüche 5 bis 12, **dadurch gekennzeichnet, daß** während der Regenerierungsphase der pH-Wert der Regenerierungslösung höchstens gleich 4 ist, wobei die letztere eine Säure enthält, die nicht mit dem Liganden oder Komplexbildungsmittel reagiert, das in der Regenerierungslösung vorliegt.

14. Verfahren nach einem der Ansprüche 5 bis 13, **dadurch gekennzeichnet, daß** der Ligand oder das Komplexbildungsmittel, das in der Regenerierungslösung vorliegt, aus der Gruppe ausgewählt ist, die aus dem Thioharnstoff, dem Thiamin und HCl besteht, wobei die Konzentration der Liganden- oder Komplexbildungsmittel-Moleküle derart ist, daß man zu einem Verhältnis (Ligandenmoleküle/Silbermoleküle) von mehr als ungefähr 4 gelangt.

15. Verfahren nach einem der Ansprüche 5 bis 13, **dadurch gekennzeichnet, daß** die Vorgänge der Regeneration und der Elektrolyse bei Temperaturen zwischen 30°C und 50°C, vorzugsweise zwischen 30°C und 40°C durchgeführt werden.

16. Verfahren nach einem der Ansprüche 5 bis 15, **dadurch gekennzeichnet, daß** die Elektrolyse bei einem pH-Wert zwischen 0 und 5, vorzugsweise zwischen 0 und 1, unter heftigem Rühren in turbulenter Strömung, unter Schutzatmosphäre im Fall der Verwendung eines luftempfindlichen Liganden oder Komplexbildungsmittels und unter Überwachung der Änderung des Elektrolysestroms, um seinen Abfall unter einen vorbestimmten Schwellenwert, der zum Stopp der Elektrolyse führt, zu lokalisieren, durchgeführt wird.

17. Verfahren nach einem der Ansprüche 5 bis 16, **dadurch gekennzeichnet, daß** die Wasch- oder Spülwasser, die aus der Entsilberung resultieren, sowie die Waschwasser der Filme, die einem Entsilberungsvorgang unterzogen werden, durch Erhöhung ihres pH-Werts auf 12 oder mehr, beispielsweise durch Zugabe von Wasserstoffperoxid, dann Filtration und schließlich Wiederherstellung ihres pH-Werts auf ungefähr 7 behandelt werden.

18. Verfahren nach einem der Ansprüche 5 bis 16, **dadurch gekennzeichnet, daß** die Spül- oder Waschwasser der Harze und der entsprechenden Behälter nach Regeneration durch Verdampfung unter Vakuum behandelt werden, um eine Restlösung zu erhalten, die eine Silberkonzentration etwa äquivalent zu jener der Regenerierungslösung, die das Silber im eluierten Zustand enthält, aufweist, wobei die Restlösung anschließend durch Elektrolyse behandelt wird und das destillierte Wasser, das bei der Konzentrationsphase durch Verdampfung erhalten wird, in einen Lagerbehälter für die Spül- und Waschwasser zurückgeführt wird.

19. Vorrichtung für die Behandlung und Rückführng der Fixierungs- oder BleichFixierungs-Bäder und eventuell der Waschwasser für Fotografie, welche insbesondere für die Durchführung des Verfahrens nach einem der Ansprüche 5 bis 17 bestimmt ist, wobei die Anlage hauptsächlich aus mindestens einem Ionenaustauscher (2, 2') besteht, der jeweils mit einem Behälter (3) für das zu behandelnde verbrauchte Bad, mit einem Behälter (4) für das behandelte Bad, mit einem Behälter (5) für eine Regenerierungslösung und mit mindestens einem Voltameter (6) mittels entsprechender Leitungen verbunden ist, die mit Unterbrechungseinrichtungen und gegebenenfalls mit angepaßten aktiven Transportmitteln für Flüssigkeiten ausgestattet sind, wobei die Gesamtheit der Einrichtungen und Transportmittel durch eine zentrale Steuereinheit (7) gesteuert und überwacht werden, wobei die Kathoden (12) des Voltameters (6) aus Silber-Feinblechen und die Anoden (13) aus Graphitplatten bestehen, wobei die abwechselnden Elektroden um 3 bis 15 mm, vorzugsweise ungefähr 8 mm voneinander entfernt sind und auf der Höhe jedes entgegengesetzten Elektrodenpaars (12, 13) durch eine Membran (14) in Form einer Ionenaustauschmembran des kationischen Typs getrennt sind, wobei die Zelle(n), die die Anode oder die Anoden (13) enthält (enthalten), mit einer stark sauren Lösung gefüllt ist (sind).

20. Vorrichtung nach Anspruch 19, **dadurch gekennzeichnet, daß** der Behälter (3) für das verbrauchte Bad mit einer Base aus einem entsprechenden Behälter (8) gespeist wird, und der Behälter (4) für das behandelte Bad mit Säure aus einem entsprechenden Behälter (9) gespeist wird, wobei die Betätigungen der Unterbrechungseinrichtungen und gegebenenfalls der Transportmittel, die die Speisung mit Base oder Säure der Behälter (3 und 4) steuern, durch ein oder jeweilige Modul(e) zur Regelung der jeweiligen pH-Werte (10, 10'), die die pH-Werte der Behälter (3 und 4) ständig messen, gesteuert werden.

21. Vorrichtung nach einem der Ansprüche 19 und 20, **dadurch gekennzeichnet, daß** der oder die Ionenaustauscher (2, 2') auch mit einem Behälter für Spül- oder Waschwasser verbunden sind, wobei die Behälter (3, 4 und 5) für das verbrauchte Bad, das behandelte Bad und die Regenerierungslösung ebenso wie das Voltameter (6) mit Rezirkulationskreisläufen (11) in geschlossenen Schleifen versehen sind.

**Claims**

1. Process for separating metal ions absorbed on an ion-exchange resin, comprising suspending or percolating the preferably cationic resin charged with a polar solvent containing an eluting agent or a mixture of eluting agents containing at least one organic or mineral ligand capable of complexing the metal ions to be separated, circulating a direct electric current, whether constant or not, in the eluting solution charged with metal complexes or in the charged mixture of resin and eluting solution forming an electrolyte between at least one cathode made of a metal identical to that of the metal ions to be recovered by deposition and at least one anode made of a material which is inert under the given physico-chemical conditions while keeping the cathode at an electric potential of which the value is slightly lower than the oxidation-reduction potential of the metal ion to be deposited during the active phases of deposition and finally repeating the last step by setting up one or more cathode(s) made of another metal and readjusting the cathode potential and the anode/cathode potential difference to new values depending on the new type of metal to be recovered the electric current applied to the electrodes being amplitude modulated as a function of the time and ending with discontinuous electrolysis comprising phases of stoppage of deposited metal during which the potential applied to the cathode or cathodes is just higher than the equilibrium potential of the voltmeter containing the electrolyte formed by the mixture of resin and eluting solution, alternating with active phases of deposition during which the potential of the cathode or cathodes is brought to a value corresponding to that of the apparent level of diffusion of the complexes to be electrolysed and containing the metal ions to be recovered, the durations and the ratios of the durations of the two phases being determined in such a way that electrolysis is synchronised with the elution reaction.

2. Process according to claim 1, **characterised in that** the constant potential difference between anode(s) and cathode(s) is close in value to the limit value for the conduction of the electrolyte formed by the eluting solution charged with metal complexes or by the mixture of resin and charged eluting solution and **in that** the electric current applied is a double alternation rectified, square, triangular, rectangular or pulsed direct current.

3. Process according to any one of claims 1 and 2, **characterised in that** the polar solvent used has a dielectric constant of between 24 and 120, **in that** the cationic resin is a resin of the type selected from the group formed by weakly or strongly acidic resins and zeolites and **in that** said process is carried out at a temperature of between -30°C and +300° C, preferably between +20° C and +200° C.

4. Process according to any one of claims 1 to 3, **characterised in that**, during the active phases of deposition, the potential of the cathode or cathodes is brought to a value situated substantially in the centre or at the end of the apparent level of diffusion of the complexes to be electrolysed and containing the metal ions to be recovered.

5. Process for the treatment and recycling of at least some effluents rejected by photographic development laboratories and/or workshops, in particular waste photographic baths from fixing or bleaching and fixing, comprising passing said effluents, in particular photographic baths and/or film washing water over a cationic ion-exchange resin which is selective relative to silver and capable of fixing in the form of new complexes different from those present in said effluents, then of regenerating said resin by elution of the silver in a regenerating solution containing a ligand capable of separating the silver from the resin and of binding it by complexing and, finally, carrying out, successively or simultaneously with regeneration, electrolysis of the regenerating solution so as to recover the silver in metallic form, the operations of regeneration/elution and of electrolysis being carried out by the separation process according to any one of claims 1 to 4.

**6.** Process according to claim 5, **characterised in that** the fixing of the silver by the resin is carried out in a basic medium and **in that** the regeneration of said resin is carried out in an acid medium, the resin/silver complex being very stable in an alkaline medium and sparingly stable in an acidic medium.

**7.** Process according to any one of claims 5 and 6, **characterised in that** the pH of the bath or of the treated water is adjusted, on the one hand, prior to passage over the ion exchange resin, by addition of a base, for example $NH_4OH$, to a value between 8 and 10, preferably of about 9 and, on the other hand, after passage over the ion exchange resin and prior to recycling, to its initial value prior to treatment, by addition of a mineral or organic acid which does not affect the components of the effluents to be recycled and does not reduce the metal to be recovered such as, for example, $H_2SO_4$, HCl or $CH_3COOH$.

**8.** Process according to any one of claims 5 and 7, **characterised in that** the resin used is a weakly acidic cationic resin formed by a polymeric substrate carrying thiol functions, strong acid functions and/or functions containing nitrogen and sulphur atoms as electron donors such as 1,3-diphenyl-2-thiourea, 2-mercaptobenzimidazole or p-dimethyl-aminobenzylidene rhodamine.

**9.** Process according to claim 8, **characterised in that** the basic substrate has a macroporous structure and is formed from polystyrene crosslinked by divinylbenzene (DVB).

**10.** Process according to claim 8, **characterised in that** the resin is formed by a substrate based on m-aminophenol polymers carrying dithiocarbamate groups.

**11.** Process according to any one of claims 5 to 10, **characterised in that** the resin is preneutralised by a strong base having a pH of between 8 and 10, preferably by $NH_4OH$ to a pH of about 9.

**12.** Process according to any one of claims 5 to 11, **characterised in that** the operations of desilvering the waste bath or the water for washing and regenerating the resin with the regenerating solution are carried out by successive percolations over said resin in the same container.

**13.** Process according to any one of claims 5 to 12, **characterised in that**, during the regeneration phase, the pH of the regenerating solution is at most equal to 4, this solution containing an acid which does not react with the ligand or complexing agent present in said regenerating solution.

**14.** Process according to any one of claims 5 to 13, **characterised in that** the ligand or complexing agent present in the regenerating solution is selected from the group formed by thiourea, thiamine and HCl, the concentration of ligand molecules or complexing agent being such that a ratio (ligand molecules/silver molecules) higher than about 4 is obtained.

**15.** Process according to any one of claims 5 to 13, **characterised in that** the regeneration and electrolysis operations are carried out at temperatures of between 30° C and 50° C, preferably between 30° C and 40° C.

**16.** Process according to any one of claims 5 to 15, **characterised in that** electrolysis is carried out at a pH of between 0 and 5, preferably between 0 and 1, with vigorous stirring in a turbulence flow in a protective atmosphere if an air-sensitive ligand or complexing agent is used and while monitoring the variation in the electrolysis current in order to record a drop thereof below a predetermined threshold value causing the stoppage of electrolysis.

**17.** Process according to any one of claims 5 to 16, **characterised in that** the washing or rinsing water resulting from the desilvering operation, as well as the film washing water which have been subjected to a desilvering operation are treated by increasing their pH to 12 or higher, for example by addition of hydrogen peroxide, then filtering and, finally, reestablishment of their pH at about 7.

**18.** Process according to any one of claims 5 to 16, **characterised in that** the resin rinsing or washing water and corresponding containers after regeneration are treated by evaporation under vacuum in order to obtain a residual solution having a silver concentration substantially equivalent to that of the regenerating solution containing the silver in the eluted state, said residual solution then being treated by electrolysis and the distilled water obtained during the phase of concentration by evaporation being reinjected into a tank for storage of the rinsing and washing water.

**19.** Installation for the treatment and recycling of fixing or bleaching and fixing baths and optionally photographic washing water intended, in particular, for carrying out the process according to any one of claims 5 to 17, installation mainly consisting of at least one ion exchanger (2, 2') connected to a tank (3) for waste bath to be treated, to a treated bath tank (4), to a regenerating solution tank (5) and to at least one voltmeter (6) respectively, via corresponding pipes equipped with shut off members and, if necessary, means for the active transfer of appropriate liquids, all of said members and transfer means being monitored and controlled by a central control unit (7), the cathodes (12) of the voltmeter consisting of thin sheets of silver, and the anodes (13) of graphite plates, said alternate electrodes being mutually spaced by 3 to 15 mm, preferably about 8 mm, and separated in the region of each pair of opposing electrodes (12, 13), by a diaphragm (14) in the form of an ion-exchange membrane of the cationic type, the compartment(s) containing the anode or the anodes (13) being filled with a strongly acidic solution.

**20.** Installation according to claim 19, **characterised in that** the waste bath tank (3) is fed with base from a corresponding container (8) and the treated bath tank (4) is fed with acid from a corresponding container (9), the actuations of the shut off members and, if necessary, the transfer means monitoring the supply of base or of acid to said tanks (3 and 4) being controlled by one or more respective modules for regulating the pH (10, 10'), which continuously record the pH of said tanks (3 and 4).

**21.** Installation according to any one of claims 19 and 20, **characterised in that** the ion exchanger or the ion exchangers (2, 2') are also connected to a rinsing or washing water tank, the waste bath, treated bath and regenerating solution tanks (3, 4 and 5) as well as the voltameter (6) being provided with closed loop recirculation circuits (11).

Fig. 1

Fig. 2

Fig.3